# EUROPÄISCHE PATENTSCHRIFT

(11) **EP 2 338 012 B1**
(45) Veröffentlichungstag und Bekanntmachung des Hinweises auf die Patenterteilung: **26.09.2012**
(21) Anmeldenummer: 09778147.0
(22) Anmeldetag: 27.08.2009
(51) Int. Cl.: F24J 3/08

(54) **ERDWÄRMESONDE**
GEOTHERMAL ENERGY PROBE
SONDE GÉOTHERMIQUE

(30) Priorität: 18.09.2008 DE 202008012453 U
(43) Veröffentlichungstag der Anmeldung: 29.06.2011
(73) Patentinhaber: Rehau AG + Co, 95111 Rehau (DE)
(72) Erfinder: LIEBEL, Volker, 91058 Erlangen (DE); OELSCHLEGEL, Alexander, 95176 Konradsreuth (DE)
(86) Internationale Anmeldenummer: PCT/EP2009/006209
(87) Internationale Veröffentlichungsnummer: WO 2010/031489

(56) Entgegenhaltungen:
- DE-A1- 2 105 120
- DE-A1- 10 236 238
- DE-A1-102007 002 606
- DE-U1- 20 202 578
- DE-U1-202007 004 346

## Beschreibung

Die Erfindung betrifft eine Erdwärmesonde, die eine besonders hohe Druckfestigkeit aufweist.

Erdwärmesonden aus Polymermaterial sind beispielsweise aus der DE 202 02 578 U1 bekannt. Aus der DE 20 2007 004 346 U1 ist eine Rohranordnung für Erdwärmesonden bekannt, bei welcher die Rohre der Rohranordnung und auch ein die Rohre verbindendes Verbindungselement eine Schutzschicht aufweisen, die ein polymeres Material umfasst.

Solche Erdwärmesonden werden in ein Bohrloch eingebaut und dienen zur Erdwärmegewinnung oder -speicherung, indem sie von einem Fluid bzw. Wärmeträgermedium durchströmt werden, das Wärmeenergie aus dem umgebenden Boden bzw. Gestein aufnimmt oder an dieses - zum Beispiel zu Speicherzwecken - abgibt.
Diesen Erdwärmesonden kommt im Rahmen der nachhaltigen Energiewirtschaft unter Ausnutzung regenerativer Quellen eine hohe Bedeutung zu.

Um die Energieausbeute zu erhöhen, werden nun zunehmend tiefer reichende Erdwärmesonden eingesetzt. Die heute üblicherweise eingesetzten Sondenrohre bestehen aus PE100 und haben aufgrund ihres Durchmesser/Wanddickenverhältnisses von 11:1 nur eine Dauer-Druckfestigkeit von 16 bar.

Da als Wärmeträgermedium in der Regel ein Wasser-Glycol-Gemisch mit einer Dichte von größer 1000 kg/m³ eingesetzt wird und die Erdwärmesondenanlage auch am höchsten Punkt noch einen geringen Überdruck aufweisen muss, wird bereits bei einer ca. 130 m tief reichenden Sonde am Fuß der Erdwärmesonde der maximal zulässige Betriebsdruck erreicht.

Wenn in der Praxis trotzdem Sonden mit einer Tiefe von größer 130 m eingebaut und betrieben werden, wird darauf vertraut, dass das Bohrloch fehlerlos ausbetoniert ist oder im Bohrloch stehendes Grundwasser für einen ausreichenden Gegendruck sorgt.

Je tiefer die Bohrlöcher werden, desto größer ist jedoch die Wahrscheinlichkeit, dass klüftige Gebirgsschichten erschlossen werden, in denen kein Grundwasser ansteht und die nicht hinreichend ausbetoniert werden können.

Die Wahrscheinlichkeit, dass Erdwärmesonden nach dem Stand der Technik bei Einbautiefen von größer 130 m - insbesondere von mehreren hundert Metern - versagen, ist demnach signifikant.

Aufgabe der Erfindung ist es daher, eine Erdwärmesonde derart weiterzubilden, dass diese bei der vorgesehenen Einbautiefe auch dann dem Innendruck dauerhaft stand hält, wenn kein oder kein ausreichender äußerer Gegendruck vorhanden ist.

Erfindungsgemäß wird diese Aufgabe dadurch gelöst, dass eine Erdwärmesonde zur Erdwärmegewinnung oder -speicherung mit mindestens einem Rohr aus Polymermaterial bereitgestellt wird, wobei das Rohr mindestens abschnittsweise armiert ist, wobei die Armierung des Polymermaterials ein flächiges Metallgebilde aufweist, das als Folie oder Folienstreifen vorliegt, wobei das Metallgebilde wenigstens abschnittsweise perforiert ist.

Damit ist eine besonders feste Armierung des Rohres möglich. Die Perforation ermöglicht dabei, dass das Polymermaterial die Durchbrüche des Metallgebildes durchdringt und so ein mechanisch hoch belastbarer Verbundwerkstoff mit einer starken Verzahnung zwischen Polymermaterial und Metall entsteht.

Bevorzugte Ausführungsformen der erfindungsgemäßen Erdwärmesonde sind in abhängigen Ansprüchen beschrieben.

Das mindestens abschnittsweise armierte Rohr zeichnet sich bevorzugt weiterhin dadurch aus, dass wenigstens der armierte Abschnitt des Rohres wenigstens eine Schicht aufweist, die Polyethylen oder Polypropylen (PP) oder Polybutylen (PB) oder Polyvinylchlorid (PVC) enthält.Es ist auch möglich, dass Copolymere oder Blends der genannten Polymere enthalten sind.

Besonders bevorzugt ist ein Polyethylen (PE), welches vernetzt ist (PE-X) oder ein PE-RC mit einem FNCT-Wert (Full Notched Creep Test) gemäß ISO 16770 unter den Bedingungen 80 °C, 4 N/mm², 2 % Arcopal N-100, der größer 3000 h, insbesondere größer 5000 h ist.

Vorteilhaft kann im Rahmen der vorliegenden Erfindung vorgesehen sein, dass der armierte Abschnitt des Rohres der Erdwärmesonde aus einer Schicht aus Polymermaterial gebildet ist, in die die Armierung eingebettet ist. Hierbei ist die Armierung von Polymermaterial umgeben. Es resultiert daraus eine besonders hohe Druckfestigkeit des Rohres.

In einer anderen ebenfalls vorteilhaften Ausführung gemäß vorliegender Erfindung kann vorgesehen sein, dass der armierte Abschnitt des Rohres eine Schicht aufweist, die aus Polymermaterial besteht und eine dazu benachbarte Schicht, welche die Armierung enthält. Bei dieser Ausführung ist eine einfache Herstelltechnik anwendbar, beispielsweise das Umflechten eines Polymerrohres. Eine besonders hohe Druckfestigkeit ist damit erreichbar.

Die Armierung kann dabei in Bezug auf die Schicht aus Polymermaterial auf der Seite, die zum Lumen hinweist, oder auf der Seite, die zur Außenoberfläche des Rohres hinweist, angeordnet sein.

Mit diesen erfindungsgemäßen Ausführungsformen lassen sich Rohre herstellen, deren maximaler Betriebsdruck je nach Armierung 20 bis mindestens 100 bar beträgt.
Daraus hergestellte erfindungsgemäße Erdwärmesonden sind somit bis in Tiefen von mindestens 1000 m einsetzbar, ohne auf äußeren Gegendruck angewiesen zu sein.

Weiterhin sind solche Rohre auch für Direktverdampfersonden mit Wärmeträgern wie z.B. Kohlendioxid oder Propan geeignet. Bei Direktverdampfersonden kann es vorteilhaft sein, die Rohrinnenwand z.B. wendelförmig zu strukturieren, um deren gleichmäßige Benetzung mit der herabrieselnden Flüssigphase des Wärmeträgers zu bewirken.

Erdwärmesondenbohrungen lassen sich nicht immer bis in die geplante Tiefe einbauen, dann müssen die in die Bohrungen einzubringenden Erdwärmesonden gekürzt werden. Eine fachgerechte Kürzung von armierten Rohrabschnitten und insbesondere das Verbinden mit horizontalen Anbindeleitungen lassen sich mit Baustellenmitteln unter Umständen nicht problemlos herstellen.

Andererseits ist bei Erdwärmesonden mit dem Wärmeträger Wasser-Glycol bis zu einer Einbautiefe von ca. 130 m eine konventionelle PE100 Erdwärmesonde hinreichend druckfest.

Vor diesem Hintergrund sieht eine besonders bevorzugte Ausführungsform der Erfindung eine Erdwärmesonde vor, die einen armierten zweiten und einen nicht armierten ersten Abschnitt aufweist.

Der armierte Abschnitt ist dabei am Fußende der Erdwärmesonde angeordnet.

Dabei kann der nichtarmierte Abschnitt bevorzugt bis zu 130 m lang sein.
Dies ist mehrfach vorteilhaft:
- die Länge des unarmierten und damit in der Herstellung kostengünstigen Rohrabschnitt ist maximiert,
- wenn das Rohr auf der Baustelle gekürzt werden muss, ist dies einfach möglich, und es muss nur kostengünstiges Material verworfen werden,
- der Anschluss an die horizontalen Anbindeleitungen kann mit konventionellen Methoden erfolgen.

Im Rahmen der vorliegenden Erfindung ist weiterhin vorgesehen, dass ein Verbindungsmittel den ersten und den zweiten Abschnitt des Rohres fluiddicht verbindet.

Das Verbindungsmittel ist bevorzugt ein im Spritzgussverfahren hergestellter Verbinder, der am armierten Rohrabschnitt fluiddicht angespritzt wird, und dessen freies Ende bevorzugt die Abmessungen des anzuschließenden Rohres aufweist.

Der Verbinder kann nachfolgend mit dem unarmierten Rohr fluiddicht verbunden werden, dies kann beispielsweise in einem Schweißverfahren oder einem Klebverfahren oder durch eine mechanische Verbindung, die u. a. ein Pressverfahren beinhaltet, erfolgen. Es ist auch möglich, die fluiddichte Verbindung durch eine Kombination der vorstehend genannten Verfahren zu bewerkstelligen.

Der Abschnitt, der aus einem armierten Polymermaterial besteht, ist in einer Ausgestaltung der Erfindung am Fußende der Erdwärmesonde angeordnet.

Diese Ausgestaltung der Erfindung stellt eine besonders hoch belastbare Erdwärmesonde zur Verfügung.

In einer vorteilhaften Weiterbildung der Erfindung kann auch vorgesehen sein, Rohrabschnitte, die sowohl armiert, wie auch unarmiert sein können, mittels des vorstehend genannten Verbindungsmittels zu einem Rohr für die Erdwärmesonde anzuordnen.

Dies ist insofern von Vorteil, als bei sehr tief in den Boden einzubauenden Erdwärmesonden dann die Handhabung vereinfacht wird, indem kurze Abschnitte mittels der Verbindungsmittel jeweils verbunden werden und damit die benötigte Rohrlänge leicht herstellbar ist.

Auch ist es damit leicht möglich, je nach Notwendigkeit im Hinblick auf die Art des im Bohrloch anstehenden Gesteins oder Erdreichs, die aneinander zu verbindenden Abschnitte aus armierten oder unarmierten auszuwählen.

So kann es günstig sein, bei einem Bohrloch, welches großteils durch anstehendes Gestein führt, das in diesen Bereich einzubauende Rohr aus mehreren armierten Abschnitten herzustellen.

Ein weiterer Vorteil ergibt sich daraus, dass die Art und Stärke der Armierung einzelner Rohrabschnitte dann frei wählbar ist, so dass beispielsweise Rohre, die in großer Tiefe einzubauen sind, wo also große Drücke herrschen, stärker armiert gewählt werden, als solche, die in geringer Tiefe liegen.

Besonders bevorzugt ist ein Rohrabschnitt, der an einem Ende gleich das dort fest und fluiddicht angeordnete Verbindungsmittel aufweist, wobei der Rohrabschnitt armiert oder unarmiert ist. Aus solchen Abschnitten kann in einfacher, schneller und kostengünstiger Weise ein beliebig langes Rohr für eine Erdwärmesonde durch Verbindung der einzelnen Abschnitte erzeugt werden.

In einer vorteilhaften Weiterbildung der Erfindung ist am Fußende der Erdwärmesonde ein Formteil angeordnet, das mit dem armierten Rohrabschnitt kraftschlüssig und fluiddicht verbunden ist.

Das Formteil kann Metall enthalten.

Im Falle einer U-Sonde, die zwei in etwa nebeneinander parallel angeordnete Rohre aufweist, enthält das Formteil einen Metallrohrbogen. Der Metallrohrbogen kann mit einem Polymermaterial umspritzt sein, wodurch eine besonders feste Verbindung mit dem Rohr der Erdwärmesonde herstellbar ist, insbesondere, wenn die Umspritzung neben dem Metallrohrbogen auch einen Verbindungsabschnitt des fluiddicht am Metallrohrbogen anzubringenden Rohres bedeckt. Die Verbindung zwischen Metallrohrbogen und Rohr kann zusätzlich durch eine Verpressung verbessert werden. Hierzu kann vorteilhaft ein Radialpressring eingesetzt werden, der von der Außenseite einen Verbindungsabschnitt des Rohres auf einen Abschnitt des Metallrohrbogens dauerhaft aufpresst.
Im Falle einer Koaxial-Sonde, bei der ein erstes Rohr im Lumen eines zweiten Rohres angeordnet ist, wobei im allgemeinen das zweite Rohr ("äußeres Rohr") als Rücklauf dient und das erste Rohr ("inneres Rohr") als Vorlauf, ist das Formteil eine Metallscheibe.
Die Metallscheibe wird im Endabschnitt des zweiten Rohres geeignet positioniert, so dass es dessen Lumen vollständig verschließt und kann dann bevorzugt mittels eines Radialpressrings gesichert werden, indem dieser von der Außenseite einen Verbindungsabschnitt des zweiten Rohres auf den gesamten Umfang der Metallscheibe dauerhaft aufpresst. Zusätzlich kann vorgesehen sein, den Endabschnitt des zweiten Rohres und ein Sicherungselement, wie einen Radialpressring, mit einem Polymermaterial zu umspritzen. Hierbei wird eine besonders sichere Verbindung zwischen Formteil und Rohr hergestellt, die zudem auch mechanisch hoch belastbar ist.

Die vorstehend aufgezeigten Umspritzungen können so gestaltet sein, dass sie einen spitzen oder konischen oder balligen oder gerippten Teil aufweisen, der die Einbringung der Erdwärmesonde in das Bohrloch erleichtern.
Es ist besonders vorteilhaft, wenn die Umspritzung in Form eines Sondenfußes ausgebildet ist. Der Sondenfuß ist dabei bevorzugt spitz oder konisch oder ballig ausgebildet und aus einem besonders widerstandsfähigen Polymermaterial hergestellt.
Es ist weiterhin vorteilhaft, wenn der Sondenfuß nahe seines spitzen, konisch zulaufenden oder ballig ausgebildeten Endes einen Durchbruch aufweist, der zur Befestigung eines Gewichtes verwendet werden kann, mit dem die Sonde in das Bohrloch einbringbar ist.
Der Durchbruch kann auch verwendet werden, um daran ein Mittel zu befestigen, beispielsweise ein Gestänge, mit dem die Sonde im Bohrloch nach unten zu schieben ist.

Vorteilhaft kann der erste unarmierte Abschnitt auf der Baustelle beim Einbau der Erdwärmesonde beim Abwickeln und von einer Spule bzw. Haspel beim Einbringen in das Bohrloch abgeschnitten werden, wenn das Rohr bis zur vorgesehenen Tiefe hinabgelassen ist oder wenn - auf Grund einer unvorhergesehenen Verlegung des Bohrlochs - die vorgesehene Tiefe nicht erreicht wird.

Darüber hinaus kann es sich als vorteilhaft erweisen, wenn Zulauf- und Ablaufrohr für das Wärmeträgermedium über eine Steckverbindung mit dem Sondenfuß verbunden sind. Eine derartige Ausgestaltung der Verbindung zwischen Zulauf- und Ablaufrohr und Sondenfuß hat den Vorteil, dass die erfindungsgemäße Erdwärmesonde an der Baustelle einfach und fluiddicht aus ihren Komponenten zusammengesetzt werden kann und damit ein gegenüber herkömmlichen Erdwärmesonden verbessertes Handling aufweist.

Es kann auch günstig sein, wenn der Sondenfuß der erfindungsgemäßen Erdwärmesonde als Metallgewicht ausgebildet ist, wobei sich eine Ausgestaltung als Stahlgewicht in der Praxis als besonders bevorzugt herausgestellt hat. Dabei kann es von Vorteil sein, wenn das Metallgewicht ein zylindrisches Metallgewicht, insbesondere ein zylindrisches Stahlgewicht ist, wobei ein Ende des Metallzylinders abgerundet oder angespitzt ausgebildet ist. Eine derartige Ausgestaltung des Sondenfußes erleichtert das Einführen der erfindungsgemäßen Erdwärmesonde in ein Bohrloch und verhindert ein Verkanten beim Absenken im Bohrloch.

Es kann auch hilfreich sein, wenn der Sondenfuß mindestens zwei axiale Ausnehmungen zur Aufnahme der Rohrenden von Zulauf- und Ablaufrohren für das Wärmeträgermedium umfasst, wobei die axialen Ausnehmungen zur Führung des Wärmeträgermediums paarweise miteinander verbunden sind. In einer derartigen Ausführungsform ist der Sondenfuß nicht torsionssteif mit den Zulauf- und Ablaufrohren verbunden, was das Einbringen der erfindungsgemäßen Erdwärmesonde in das Bohrloch weiter erleichtert. Dabei kann es sich als besonders günstig erweisen, wenn die axialen Ausnehmungen des Sondenfußes als Sackbohrung ausgebildet sind, sodass die axialen Ausnehmungen an ihrem unteren Ende nicht gegenüber der Umgebung verschlossen werden müssen.

Des Weiteren kann es vorteilhaft sein, wenn jeweils zwei axiale Ausnehmungen durch mindestens eine Querbohrung miteinander verbunden sind. Dabei ist es von großem Nutzen, wenn die Querbohrung denselben Durchmesser wie die durch die Querbohrung verbundenen axialen Ausnehmungen aufweist. Dadurch wird ein gleichmäßiges Strömungsverhalten des Wärmeträgermediums ohne sprunghaftes Ansteigen bzw. Abfallen der Strömungsgeschwindigkeit in den Zulauf- und Ablaufrohren und im Sondenfuß gewährleistet. In einer besonders bevorzugten Ausführungsform des erfindungsgemäßen Sondenfußes haben alle axialen Ausnehmungen und alle Querbohrungen denselben Durchmesser.

Es kann besonders hilfreich sein, wenn die Querbohrung als Sackbohrung ausgestaltet ist. Bei einer Ausgestaltung der Querbohrung als Sackbohrung muss die Querbohrung lediglich an einer Öffnung gegenüber der Umgebung abgedichtet sein.

Darüber hinaus kann es sich als besonders nützlich erweisen, wenn die Querbohrungen jeweils in einem der Außenseite des Sondenfußes nahen Bereich mindestens eine umlaufende Vertiefung aufweisen. Dadurch können die Querbohrungen nach außen durch eine Verschlusskappe verschlossen werden und durch die umlaufende Vertiefung kann mit einer entsprechenden Erhöhung oder einem Dichtring an der in die Querbohrung einzuführenden Oberfläche der Verschlusskappe ein Formschluss erzielt werden.

Darüber hinaus kann es von Nutzen sein, wenn die axialen Ausnehmungen zum Transport mit Stopfen verschließbar sind. Dabei kann es von Vorteil sein, wenn die dafür verwendeten Stopfen derart ausgebildet sind, dass zwischen ihren in die axialen Ausnehmungen einzuführenden Oberflächen und den umlaufenden Vertiefungen der axialen Ausnehmungen ein Formschluss erfolgt. Ein Verschließen der axialen Ausnehmungen des Sondenfußes verhindert wirksam deren mechanische Beschädigung und ein Eindringen von Verunreinigungen während des Transports des Sondenfußes.

Darüber hinaus kann es von besonderem Vorteil sein, wenn die Zulauf- und Ablaufrohre für das Wärmeträgermedium unter Verwendung eines Fittings in die axialen Ausnehmungen des Sondenfußes eingesetzt sind. Die Verwendung von Fittingen zum Einstecken der Zulauf- und Ablaufrohre in die axialen Ausnehmungen des Sondenfußes ermöglicht ein schnelles und einfaches Zusammensetzen der erfindungsgemäßen Erdwärmesonde auf der Baustelle. Darüber hinaus gewährleistet die Verwendung eines derartigen Fittings eine sichere Verbindung zwischen Zulauf- bzw. Ablaufrohren und dem Sondenfuß der erfindungsgemäßen Erdwärmesonde und eine hohe Dichtigkeit der Verbindung. Dabei kann es sich als besonders günstig erweisen, wenn die Zulauf- und Ablaufrohre für das Wärmeträgermedium jeweils durch eine Verbindung zwischen einem Dichtring des Fittings und einer umlaufenden Vertiefung in einem der Oberseite des Sondenfußes nahen Bereich der axialen Ausnehmungen eingesetzt sind. Eine derartige Verbindung zwischen Zulauf- bzw. Ablaufrohren und dem erfindungsgemäßen Sondenfuß gewährleistet ein sicheres und fluiddichtes Verbinden der Bestandteile der erfindungsgemäßen Erdwärmesonde vor ihrem Einführen in das Bohrloch auf der Baustelle. Ein besonders hoher Grad an Sicherheit der Verbindung zwischen Sondenfuß und Zulauf- bzw. Ablaufrohren wird dann erzielt, wenn die Zulauf- und Ablaufrohre für das Wärmeträgermedium jeweils durch mindestens zwei Verbindungen jeweils zwischen einem Dichtring des Fittings und einer umlaufenden Vertiefung in einem der Oberseite des Sondenfußes nahen Bereich der axialen Ausnehmungen eingesetzt sind.

Im Zusammenhang mit der vorliegenden Erfindung bedeutet der Begriff "fluiddicht", dass durch eine derartige Verbindung kein Wärmeträgermedium aus der Erdwärmesonde in die Umgebung austreten kann und umgekehrt kein Grundwasser und/oder keine Luft durch die Verbindung in die Erdwärmesonde eindringen können.

**D**ie vorliegende Erfindung findet Anwendung bei Erdwärmesonden zum Wärmetransfer in das oder aus dem diese Erdwärmesonden umgebenden Gebirge, insbesondere bei Einbautiefen von mehr als 130 m.

Bevorzugte Ausführungsformen der vorliegenden Erfindung werden im Folgenden unter Bezugnahme auf die beigefügten Zeichnungen beschrieben. Die vorliegende Erfindung soll jedoch nicht auf die beschriebenen Ausführungsformen beschränkt sein.

### Kurze Beschreibung der Figuren

- Fig. 1: zeigt eine Erdwärmesonde in einer Schnittdarstellung;
- Fig. 2: zeigt eine Erdwärmesonde in alternativer Ausgestaltung in einer Schnittdarstellung;
- Fig. 3: zeigt eine Erdwärmesonde in einer Schnittdarstellung.
- Fig. 4a: zeigt einen Querschnitt durch einen Sondenfuß einer weiteren Ausführungsform der erfindungsgemäßen Erdwärmesonde vor dem Zusammenbau auf der Baustelle.
- Fig. 4b: zeigt eine Draufsicht auf den in Fig. 4a dargestellten Sondenfuß.
- Fig. 5: zeigt einen Querschnitt durch eine erfindungsgemäße Erdwärmesonde mit dem in Fig. 4a dargestellten Sondenfuß und eingesetztem Zulaufrohr und Ablaufrohr für ein Wärmetransportmedium.

### Detaillierte Beschreibung der bevorzugten Ausführungsformen

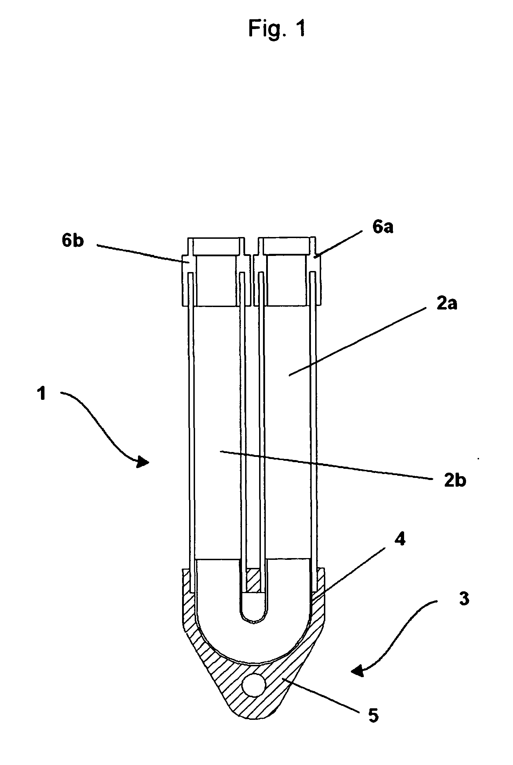

In Fig. 1 ist eine Erdwärmesonde 1 gemäß vorliegender Erfindung gezeigt, die aus zwei ungefähr parallel angeordneten Rohren 2a, 2b und einem Fußteil 3 besteht.
Im Fußteil 3 ist ein Formteil, das als Metallrohrbogens 4 ausgebildet ist, angeordnet. Die beidseitigen Endabschnitte des Metallrohrbogens 4 sind in die Rohre 2a, 2b eingeschoben.

Der Metallrohrbogen 4 weist beidseitig Endabschnitte auf, die zylinderförmig ausgebildet sind. Diese sind mit einem etwa halbkreisförmig gebogenem Rohrabschnitt verbunden. In der Draufsicht resultiert dabei in etwa die Form eines Hufeisens.
Die Wände der Verbindungsabschnitte der Rohre 2a, 2b übergreifen zu etwa der Hälfte der Länge des zylindrisch ausgebildeten Teils des Metallrohrbogens 4 diesen außenseitig. Damit ist die fluiddichte Verbindung der beiden Rohre 2a, 2b mittels des Metallrohrbogens 4 sichergestellt.
Der Metallrohrbogen 4 und ein Abschnitt der Verbindungsabschnitte der Rohre 2a, 2b ist mit einem Polymermaterial zu einem Sondenfuß 5 umspritzt.
Hierbei ist an den Verbindungsstellen der Rohre 2a, 2b mit dem Metallrohrbogen 4 eine besonders fluiddichte Verbindung ausgebildet.
Der Sondenfuß 5 weist einen Durchbruch auf.
Am dem Sondenfuß 5 gegenüberliegenden Ende der Rohre 2a, 2b sind Verbindungsmittel 6a, 6b angeordnet.
Die Verbindungsmittel 6a, 6b sind dabei im Spritzgussverfahren an die Enden der Rohre 2a, 2b angespritzt und fluiddicht mit diesen verbunden.
Die Verbindungsmittel 6a, 6b sind derartig gestaltet, dass an deren freien Enden weitere hier nicht gezeigte Rohre fluiddicht befestigbar sind. Dies ist in Form von Verbindungsabschnitten realisiert, auf die die Rohre - ggf. nach Aufweiten des lichten Durchmessers - aufschiebbar sind.

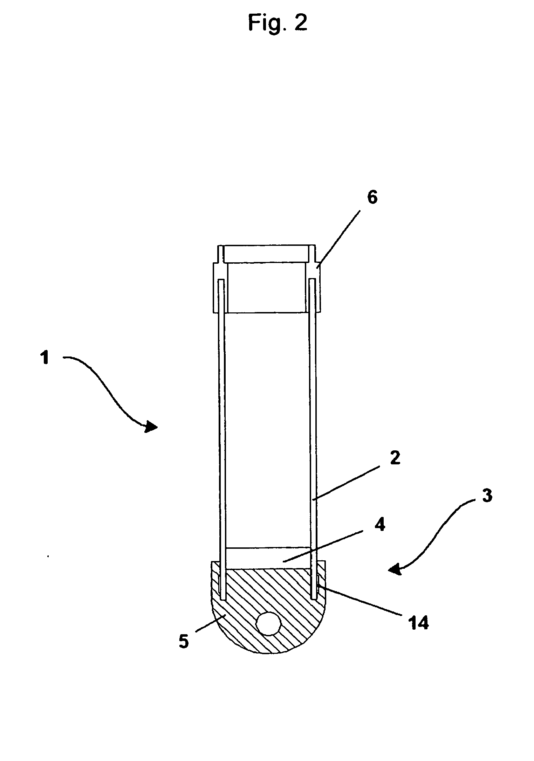

Fig. 2 zeigt eine weitere Erdwärmesonde 1 nach der vorliegenden Erfindung, die aus einem Rohr 2 besteht (Koaxialsonde). Das Rohr, das im Lumen des Rohres 2 angeordnet ist, ist hier nicht gezeigt.
Die Erdwärmesonde 1 weist weiterhin einen Fußteil 3 auf.
Im Fußteil 3 ist ein Formteil, das als Metallscheibe 4 ausgebildet ist, angeordnet.
Die Metallscheibe 4 ist in einen Endabschnitt des Rohres 2 eingeschoben, so dass das Lumen des Rohres 2 verschlossen ist.
Die Wand des Verbindungsabschnittes des Rohres 2 übergreift den Rand der Metalischeibe 4 außenseitig.
Damit ist der fluiddichte Verschluss des Rohres 2 mittels der Metallscheibe 4 sichergestellt. Weiterhin ist gezeigt, dass die Metallscheibe 4 mit Hilfe eines Radialpressringes 14, der dauerhaft die Wand des Rohres 2 gegen den Rand der Metallscheibe 4 drückt, festgelegt ist. Hieraus resultiert eine besonders hohe Dichtheit der Erdwärmesonde 1 im Endbereich.

Die Metallscheibe 4 und ein Abschnitt des Verbindungsabschnittes des Rohres 2 ist mit einem Polymermaterial zu einem Sondenfuß 5 umspritzt.
Hierbei ist an der Verbindungsstelle des Rohres 2 mit der Metallscheibe 4 eine besonders fluiddichte Verbindung ausgebildet.
Der Sondenfuß 5 weist einen Durchbruch auf.
Am dem Sondenfuß 5 gegenüberliegenden Ende des Rohres 2 ist ein Verbindungsmittel 6 angeordnet.
Das Verbindungsmittel 6 ist dabei im Spritzgussverfahren an das Ende des Rohres 2 angespritzt und fluiddicht mit diesem verbunden.
Das Verbindungsmittel 6 ist derartig gestaltet, dass an dessen freien Ende ein weiteres hier nicht gezeigtes Rohr fluiddicht befestigbar ist. Dies ist in Form eines Verbindungsabschnittes realisiert, auf den das Rohr - ggf. nach Aufweiten des lichten Durchmessers - aufschiebbar ist.

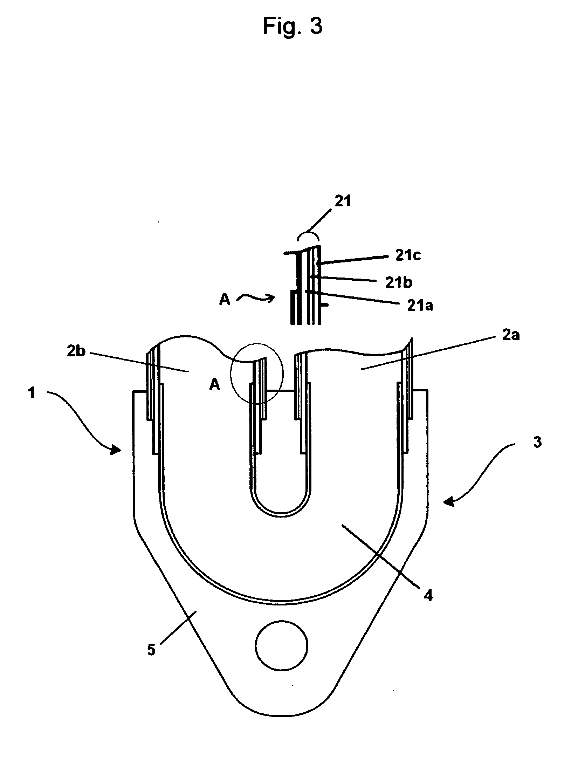

Die Erdwärmesonde 1 gemäß Fig. 3 zeigt folgenden Aufbau:
Die Erdwärmesonde 1 ist aus zwei ungefähr parallel angeordneten Rohren 2a, 2b und einem Fußteil 3 aufgebaut.
Im Fußteil 3 ist ein Formteil, das als Metallrohrbogens 4 ausgebildet ist, angeordnet.
Die beidseitigen Endabschnitte des Metallrohrbogens 4 sind in die Rohre 2a, 2b eingeschoben.
Der Metallrohrbogen 4 weist beidseitig Endabschnitte auf, die zylinderförmig ausgebildet sind. Diese sind mit einem etwa halbkreisförmig gebogenen Rohrabschnitt verbunden. In der Draufsicht resultiert dabei in etwa die Form eines Hufeisens.
Die Wände der Verbindungsabschnitte der Rohre 2a, 2b übergreifen zu etwa der Hälfte der Länge des zylindrisch ausgebildeten Teils des Metallrohrbogens 4 diesen außenseitig.
Damit ist die fluiddichte Verbindung der beiden Rohre 2a, 2b mittels des Metallrohrbogens 4 sichergestellt.
Die Rohre 2a, 2b haben eine Wandung 21.
Eine Ausschnittsvergrößerung des Details "A" der Wandung 21 ist ebenfalls gezeigt.
Die Wandung 21 des Rohrs ist dreischichtig aufgebaut.
Die innerste, dem Lumen der Rohre 2a, 2b zugewandte Schicht 21 a besteht aus vernetztem Polyethylen (PE-X).
Es schließt sich eine Schicht 21b an, die aus der Fadenarmierung besteht.
Hierbei sind Fäden auf der äußeren Oberfläche der Schicht 21a angeordnet.

Die äußere Schicht 21c bildet eine Schutzschicht aus Polyethylen (PE), die besonders gleitfähig und abriebfest ist.
Die beidseitigen Endabschnitte des Metallrohrbogens 4 sind in die Rohre 2a, 2b eingeschoben.
Der Metallrohrbogen 4 weist beidseitig Endabschnitte auf, die zylinderförmig ausgebildet sind. Diese sind mit einem etwa halbkreisförmig gebogenen Rohrabschnitt verbunden. In der Draufsicht resultiert dabei in etwa die Form eines Hufeisens.
Die Wände der Verbindungsabschnitte der Rohre 2a, 2b übergreifen zu etwa der Hälfte der Länge des zylindrisch ausgebildeten Teils des Metallrohrbogens 4 diesen außenseitig. Damit ist die fluiddichte Verbindung der beiden Rohre 2a, 2b mittels des Metallrohrbogens 4 sichergestellt.
Der Metallrohrbogen 4 und ein Abschnitt der Verbindungsabschnitte der Rohre 2a, 2b ist mit einem Polymermaterial zu einem Sondenfuß 5 umspritzt.
Als Polymermaterial ist PE 100 eingesetzt.
Hierbei ist an den Verbindungsstellen der Rohre 2a, 2b mit dem Metallrohrbogen 4 eine besonders fluiddichte Verbindung ausgebildet.
Der Sondenfuß 5 weist einen Durchbruch auf.

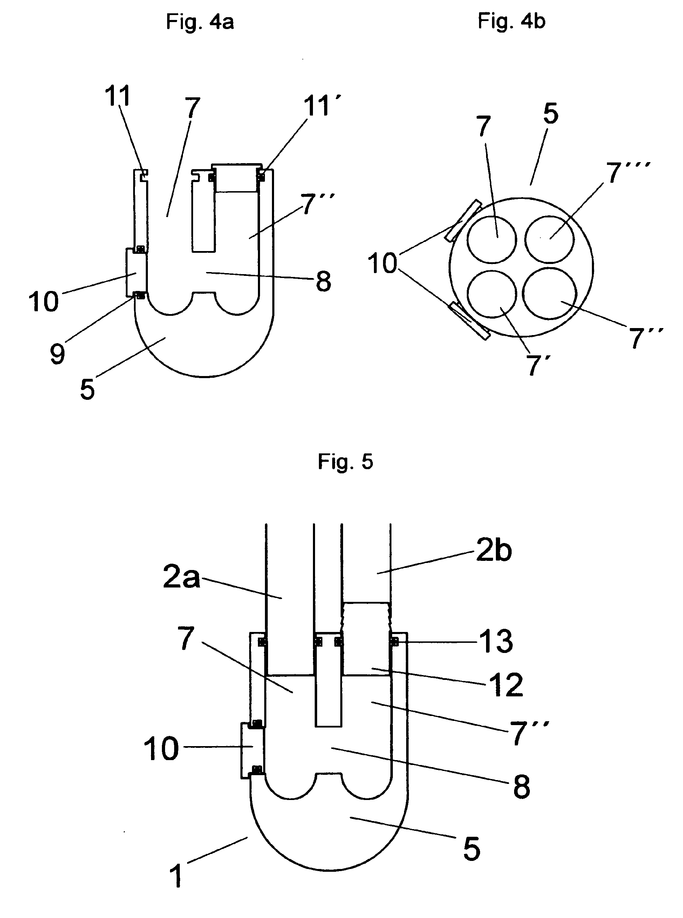

Fig. 4a zeigt einen Querschnitt durch einen bevorzugten Sondenfuß 5 einer weiteren Ausführungsform der erfindungsgemäßen Erdwärmesonde 1. Der Sondenfuß 5 ist ein zylindrisches Metallgewicht aus Stahl, dessen unteres Ende abgerundet ist. Mit diesem abgerundeten unteren Ende wird die Erdwärmesonde nach ihrem Zusammenbau auf der Baustelle in die Bohrung eingeführt.

Am oberen Ende des zylindrischen Metallgewichts sind in axialer Richtung vier Ausnehmungen 7, 7', 7", 7'" eingebracht, die alle denselben Durchmesser besitzen (Fig. 4b). Die axialen Ausnehmungen 7, 7', 7", 7"' dienen zur Aufnahme der Zulaufrohre 2a und Ablaufrohre 2b. An ihrem unteren Ende sind die axialen Ausnehmungen 7, 7', 7", 7"' im Metallblock abgerundet.

In der Nähe der Oberseite des zylindrischen Metallgewichts befindet sich in jeder axialen Ausnehmung 7, 7', 7", 7"' eine umlaufende Vertiefung 11, 11'. Die umlaufenden Vertiefungen 11, 11' haben jeweils einen rechtwinkligen Querschnitt. Für den Transport können die axialen Ausnehmungen 7, 7', 7", 7'" jeweils durch einen Stopfen verschlossen werden, wobei wiederum ein Dichtring des Stopfens mit der umlaufenden Vertiefung 11, 11' der jeweiligen axialen Ausnehmung 7, 7', 7", 7"' einen Formschluss erzeugt.

Die axialen Ausnehmungen 7 und 7" sind über eine Querbohrung 8 miteinander verbunden. Ebenso sind die axialen Ausnehmungen 7' und 7"' über eine weitere Querbohrung miteinander verbunden (nicht dargestellt). Dabei verläuft die Querbohrung 8 in dem Metallgewicht unterhalb der weiteren Querbohrung, die die axialen Ausnehmungen 7' und 7"' miteinander verbindet. Die Querbohrung 8 und die weitere Querbohrung haben denselben Durchmesser wie die axialen Ausnehmungen 7, 7', 7", 7"'. Dadurch wird ein gleichmäßiger Zu- und Ablauf des Wärmeträgermediums gewährleistet. Weiterhin sind beide Querbohrungen als Sackbohrungen ausgestaltet.

In der in Fig. 4a und 4b dargestellten Ausführungsform des bevorzugt in der vorliegenden Erfindung verwendeten Sondenfußes 5 erstreckt sich die Querbohrung 8 von der Außenseite des Sondenfußes 5 aus durch die axiale Ausnehmung 7 und endet dann in der axialen Ausnehmung 7" (Fig. 4a). Ebenso geht die die axialen Ausnehmungen 7' und 7"' miteinander verbindende Querbohrung von der Außenseite des Sondenfußes 5 aus, verläuft durch die axiale Ausnehmung 7' und endet in der axialen Ausnehmung 7"'. Durch einen derartigen Aufbau kann der Sondenfuß 5 in einer Erdwärmesonde 1 mit einem und zwei Kreisläufen für das Wärmeträgermedium eingesetzt werden. Bei Verwendung des Sondenfußes 5 in einer Erdwärmesonde 1 mit nur einem Kreislauf für das Wärmeträgermedium können Zulaufrohr 2a und Ablaufrohr 2b in die miteinander über die Querbohrung 8 verbunden axialen Ausnehmungen 7 und 7" oder in die miteinander über die weitere Querbohrung verbunden axialen Ausnehmungen 7' und 7"' eingesteckt sein. Dagegen sind bei einer Verwendung des Sondenfußes 5 in einer Erdwärmesonde 1 mit zwei Kreisläufen für das Wärmeträgermedium Zulaufrohre 2a und Ablaufrohre 2b in die axialen Ausnehmungen 7, 7', 7", 7"' eingesteckt.

In der Nähe der Außenseite des Sondenfußes 5 weisen die Querbohrung und die weitere Querbohrung jeweils eine umlaufende Vertiefung 9 auf. Die umlaufenden Vertiefungen 9 haben ebenfalls einen rechtwinkligen Querschnitt. Zum Verschließen wird jeweils eine Verschlusskappe 10 in die Querbohrung 8 und in die weitere Querbohrung eingeführt, wobei ein Dichtring der Verschlusskappe 10 mit der jeweiligen umlaufenden Vertiefung 9 einen Formschluss erzeugt, sodass die Querbohrungen an der Außenseite des Sonderfußes 5 durch die Verschlusskappen 10 im Wesentlichen fluiddicht verschlossen werden.

Zum Zusammenbau der Erdwärmesonde auf der Baustelle werden die Stopfen vor Einführen der Erdwärmesonde in das Bohrloch aus den axialen Ausnehmungen 7, 7', 7", 7'" entfernt und ein Ende der Zulaufrohre 2a wird in die jeweilige axiale Ausnehmung 7, 7' des Sondenfußes 5 eingesteckt. Dabei bildet ein Dichtring des jeweiligen Zulaufrohres 2a mit der umlaufenden Vertiefung 11 der axialen Ausnehmung 7, 7' einen Formschluss, sodass die Verbindungen zwischen Zulaufrohren 2a und dem Sondenfuß 5 im Wesentlichen fluiddicht ist. In der in Fig. 5 dargestellten Ausführungsform der erfindungsgemäßen Erdwärmesonde 1 sind die Ablaufrohre 2b für das Wärmeträgermedium über einen Fitting 12 in die entsprechenden axialen Ausnehmungen 7", 7"' des Sondenfußes 5 eingesetzt. Ein Dichtring 13 des Fittings 12 sorgt wiederum für einen Formschluss mit der umlaufenden Vertiefung 11' der axialen Ausnehmung 7", 7"', sodass die Verbindung zwischen den Zulaufrohren 2b und dem Sondenfuß 5 wiederum im Wesentlichen fluiddicht ausgebildet ist.

Ebenso können auch die Zulaufrohre 2a über einen derartigen Fitting 12 in den Sondenfuß 5 eingesteckt sein. Darüber hinaus können auch die Ablaufrohre 2b ohne den Einsatz eines Fittings 12 in den Sondenfuß 5 eingesteckt sein. In einer besonders bevorzugten Ausführungsform sind sämtliche Zulaufrohre 2a und Ablaufrohre 2b für das Wärmeträgermedium über einen Fitting 12 in den Sondenfuß 5 eingesteckt.

In anderen Ausführungsformen der vorliegenden Erfindung wird der Formschluss zwischen der umlaufenden Vertiefung 11 der axialen Ausnehmung 7, 7' und dem Zulaufrohr 2a sowie zwischen der umlaufenden Vertiefung 11' der axialen Ausnehmung 7", 7"' und dem Ablaufrohr 2b durch Arretierungsstifte erzeugt, die über entsprechende Bohrungen im Sondenfuß 5 eingeführt werden. Ebenso kann das Zulaufrohr 2a in der umlaufenden Vertiefung 11 durch Arretierungsstifte und das Ablaufrohr 2b in der umlaufenden Vertiefung 11' durch einen Dichtring fixiert sein und umgekehrt. Ebenso können auch Zulaufrohre 2a und/oder Ablaufrohre 2b über einen Fitting 12 in den Sondenfuß 5 eingesteckt sein und der jeweilige Fitting 12 ist über Arretierungsstifte im Sondenfuß 5 befestigt. In einer ganz besonders bevorzugten Ausführungsform sind sämtliche Zulaufrohre 2a und Ablaufrohre 2b für das Wärmeträgermedium über einen Fitting 12 in den Sondenfuß 5 eingesteckt und der jeweilige Fitting 12 ist über Arretierungsstifte im Sondenfuß 5 befestigt.

Derartige Steckverbindungen unter Verwendung von Dichtringen und/oder Arretierungsstiften gewährleisten sichere und nicht torsionssteife Verbindungen zwischen den Rohren 2a, 2b und dem Sondenfuß 5.

In der in Figur 5 dargestellten Ausführungsform besitzen die Zulaufrohre 2a und Ablaufrohre 2b jeweils einen mehrschichtigen Aufbau mit einer inneren, dem Lumen der Rohre 2a, 2b zugewandtem Schicht aus vernetztem Polyethylen (PE-X), einer sich anschließenden Schicht aus einer Edelstahldrahtarmierung und einer darüber ausgebildeten Schutzschicht aus Polyethylen (PE). Die Schutzschicht aus Polyethylen gewährleistet, dass die Rohre 2a, 2b an ihrer Außenseite besonders gleitfähig und abriebfest sind. Alternativ dazu können auch nur einzelne der Zulaufrohre 2a und Ablaufrohre 2b einen derartigen Aufbau aufweisen.

Die erfindungsgemäße Erdwärmesonde kann in großen Tiefen, vorzugsweise in Tiefen von bis zu ca. 700 m, in Abhängigkeit von der verwendeten Armierung auch in Tiefen von über 1000 m eingesetzt werden.

## Patentansprüche

1. Erdwärmesonde (1) zur Erdwärmegewinnung oder -speicherung mit mindestens einem Rohr (2) aus Polymermaterial, wobei das Rohr (2) mindestens abschnittsweise armiert ist, **dadurch gekennzeichnet, dass** die Armierung des Polymermaterials ein flächiges Metallgebilde aufweist, das als Folie oder Folienstreifen vorliegt, wobei das Metallgebilde wenigstens abschnittsweise perforiert ist.

2. Erdwärmesonde (1) nach Anspruch 1, **dadurch gekennzeichnet, dass** wenigstens der armierte Abschnitt des Rohres (2) wenigstens eine Schicht aufweist, die Polyethylen (PE) oder Polypropylen (PP) oder Polybutylen (PB) oder Polyvinylchlorid (PVC) oder deren Copolymere oder Blends enthält.

3. Erdwärmesonde (1) nach einem der vorangehenden Ansprüche, **dadurch gekennzeichnet, dass** das Rohr (2) einen ersten Abschnitt und einen zweiten Abschnitt aufweist, wobei der zweite Abschnitt armiert ist.

4. Erdwärmesonde (1) nach Anspruch 3, **dadurch gekennzeichnet, dass** ein Verbindungsmittel vorgesehen ist, den ersten und den zweiten Abschnitt des Rohres (2) fluiddicht zu verbinden.

5. Erdwärmesonde (1) nach einem der Ansprüche 3 oder 4, **dadurch gekennzeichnet, dass** der Abschnitt, der aus einem armierten Polymermaterial besteht, am Fußende der Erdwärmesonde (1) angeordnet ist.

6. Erdwärmesonde (1) nach einem der vorangehenden Ansprüche, **dadurch gekennzeichnet, dass** am Fußende der Erdwärmesonde ein Formteil angeordnet ist, das mit dem armierten Polymermaterial kraftschlüssig und fluiddicht verbunden ist.

7. Erdwärmesonde (1) nach einem der vorangehenden Ansprüche, **dadurch gekennzeichnet, dass** Zulauf- und Ablaufrohr (2a, 2b) für das Wärmeträgermedium über eine Steckverbindung mit dem Sondenfuß (5) verbunden sind.

8. Erdwärmesonde (1) nach einem der vorangehenden Ansprüche, **dadurch gekennzeichnet, dass** der Sondenfuß (5) als Metallgewicht, vorzugsweise als Stahlgewicht ausgebildet ist.

9. Erdwärmesonde (1) nach Anspruch 8, **dadurch gekennzeichnet, dass** der Sondenfuss (5) mindestens zwei axiale Ausnehmungen (7, 7', 7", 7"') zur Aufnahme der Rohrenden von Zulauf- und Ablaufrohren (2a, 2b) umfasst, wobei die axialen Ausnehmungen (7, 7', 7", 7"') zur Führung eines Wärmeträgermediums paarweise miteinander verbunden sind, vorzugsweise über eine Querbohrung (8).

10. Erdwärmesonde (1) nach Anspruch 8 oder Anspruch 9, **dadurch gekennzeichnet, dass** die Zulauf- und Ablaufrohre (2a, 2b) für das Wärmeträgermedium jeweils unter Verwendung eines Fittings (12) in die axialen Ausnehmungen (7, 7', 7", 7"') des Sondenfußes (5) eingesteckt sind.

11. Erdwärmesonde (1) nach einem der Ansprüche 8 bis 10, **dadurch gekennzeichnet, dass** die Zulauf- und Ablaufrohre (2a, 2b) für das Wärmeträgermedium jeweils durch Formschluss zwischen einem Dichtring (13) des Fittings (12) und einer umlaufenden Vertiefung (11, 11') der axialen Ausnehmungen (7, 7', 7", 7"') im Wesentlichen fluiddicht eingesteckt sind.

12. Erdwärmegewinnungs- oder -speicherungssystem mit einer Erdwärmesonde (1) nach einem der Ansprüche 1 bis 11.

## Claims

1. Geothermal energy probe (1) for geothermal energy extraction or storage, comprising at least one pipe (2) made from polymer material, the pipe (2) being reinforced at least in sections, **characterized in that** the reinforcement of the polymer material has a flat metal structure which is present as foil or foil strips, the metal structure being perforated at least in sections.

2. Geothermal energy probe (1) according to Claim 1, **characterized in that** at least the reinforced section of the pipe (2) has at least one layer which includes polyethylene (PE) or polypropylene (PP) or polybutylene (PB) or polyvinyl chloride (PVC) or copolymers or blends thereof.

3. Geothermal energy probe (1) according to one of the preceding claims, **characterized in that** the pipe (2) has a first section and a second section, the second section being reinforced.

4. Geothermal energy probe (1) according to Claim 3, **characterized in that** a connecting means is provided to connect the first and the second sections of the pipe (2) in a fluid-tight fashion.

5. Geothermal energy probe (1) according to either of Claims 3 and 4, **characterized in that** the section which comprises a reinforced polymer material is arranged at the foot end of the geothermal energy probe (1).

6. Geothermal energy probe (1) according to one of the preceding claims, **characterized in that** arranged at the foot end of the geothermal energy probe is a shaped part which is connected to the reinforced polymer material in a force-fitting and fluid-tight fashion.

7. Geothermal energy probe (1) according to one of the preceding claims, **characterized in that** the inlet and outlet pipes (2a, 2b) for the heat transfer medium are connected to the probe foot (5) via a plug-in connection.

8. Geothermal energy probe (1) according to one of the preceding claims, **characterized in that** the probe foot (5) is designed as a metal weight, preferably as a steel weight.

9. Geothermal energy probe (1) according to Claim 8, **characterized in that** the probe foot (5) comprises at least two axial recesses (7, 7', 7", 7"') for holding the pipe ends of the inlet and outlet pipes (2a, 2b), the axial recesses (7, 7', 7", 7"') for conducting a heat transfer medium being interconnected in pairs, preferably via a transverse bore (8).

10. Geothermal energy probe (1) according to Claim 8 or Claim 9, **characterized in that** the inlet and outlet pipes (2a, 2b) for the heat transfer medium are respectively plugged into the axial recesses (7, 7', 7", 7"') of the probe foot (5) by using a fitting (12).

11. Geothermal energy probe (1) according to one of Claims 8 to 10, **characterized in that** the inlet and outlet pipes (2a, 2b) for the heat transfer medium are respectively plugged in in a substantially fluid-tight fashion by a form fit between a sealing ring (13) of the fitting (12) and a circumferential depression (11, 11') of the axial recesses (7, 7', 7", 7"').

12. Geothermal energy extraction or storage system comprising a geothermal energy probe (1) according to one of Claims 1 to 11.

## Revendications

1. Sonde géothermique (1) pour la récupération ou l'accumulation de l'énergie géothermique, comprenant au moins un tube (2) en matériau polymère, le tube (2) étant armé au moins dans certaines sections, **caractérisée en ce que** l'armature du matériau polymère présente une formation métallique plane qui se présente sous la forme d'un film ou de bandes de film, la formation métallique étant perforée au moins dans certaines sections.

2. Sonde géothermique (1) selon la revendication 1, **caractérisée en ce qu'**au moins la section armée du tube (2) présente au moins une couche qui contient du polyéthylène (PE) ou du polypropylène (PP) ou du polybutylène (PB) ou du polychlorure de vinyle (PVC) ou leurs copolymères ou mélanges.

3. Sonde géothermique (1) selon l'une des revendications précédentes, **caractérisée en ce que** le tube (2) présente une première section et une deuxième section, la deuxième section étant armée.

4. Sonde géothermique (1) selon la revendication 3, **caractérisée en ce que** sont prévus des moyens de liaison pour relier de manière étanche aux liquides la première et la deuxième section du tube (2).

5. Sonde géothermique (1) selon l'une des revendications 3 ou 4, **caractérisée en ce que** la section qui se compose d'un matériau polymère armé est montée à l'extrémité côté pied de la sonde géothermique (1).

6. Sonde géothermique (1) selon l'une des revendications précédentes, **caractérisée en ce qu'**à l'extrémité côté pied de la sonde géothermique est disposée une pièce façonnée qui est reliée par adhérence et de manière étanche aux liquides avec le matériau polymère armé.

7. Sonde géothermique (1) selon l'une des revendications précédentes, **caractérisée en ce que** les tubes d'arrivée et d'écoulement (2a, 2b) du fluide caloporteur sont reliés avec le pied de la sonde (5) par le biais d'une liaison à enficher.

8. Sonde géothermique (1) selon l'une des revendications précédentes, **caractérisée en ce que** le pied de la sonde (5) est réalisé sous la forme d'un poids métallique, notamment sous la forme d'un poids en acier.

9. Sonde géothermique (1) selon la revendication 8, **caractérisée en ce que** le pied de la sonde (5) comprend au moins deux évidements axiaux (7, 7', 7", 7"') pour accueillir les extrémités de tube des tubes d'arrivée et d'écoulement (2a, 2b), les évidements axiaux (7, 7', 7", 7"') étant reliés entre eux par paires pour le guidage d'un fluide caloporteur, de préférence par le biais d'un alésage transversal (8).

10. Sonde géothermique (1) selon la revendication 8 ou la revendication 9, **caractérisée en ce que** les tubes d'arrivée et d'écoulement (2a, 2b) pour le fluide caloporteur sont enfichés dans les évidements axiaux (7, 7', 7", 7"') du pied de la sonde (5) à chaque fois en utilisant un raccord (12).

11. Sonde géothermique (1) selon l'une des revendications 8 à 10, **caractérisée en ce que** les tubes d'arrivée et d'écoulement (2a, 2b) pour le fluide caloporteur sont enfichés pour l'essentiel de manière étanche aux liquides à chaque fois par complémentarité de forme entre une bague d'étanchéité (13) du raccord (12) et un enfoncement (11, 11') périphérique des évidements axiaux (7, 7', 7", 7"').

12. Système de récupération ou d'accumulation de l'énergie géothermique muni d'une sonde géothermique (1) selon l'une des revendications 1 à 11.
